# FASCICULE DE BREVET EUROPEEN

(11) **EP 3 947 157 B1**
(45) Date de publication et mention de la délivrance du brevet: **07.06.2023**
(21) Numéro de dépôt: 20817405.2
(22) Date de dépôt: 09.12.2020
(51) Int. Cl.: B64G 1/10, B64G 1/64

(54) **PROCÉDÉ D'ASSEMBLAGE D'UNE PLURALITÉ D'ÉQUIPEMENTS SUR UNE STRUCTURE DE SATELLITE ET STRUCTURE DE SATELLITE PORTANT UNE PLURALITÉ D'ÉQUIPEMENTS**
VERFAHREN ZUR MONTAGE EINER VIELZAHL VON VORRICHTUNGEN AUF EINER SATELLITENSTRUKTUR UND SATELLITENSTRUKTUR MIT MEHREREN VORRICHTUNGEN
METHOD FOR ASSEMBLING A PLURALITY OF DEVICES ON A SATELLITE STRUCTURE, AND SATELLITE STRUCTURE SUPPORTING A PLURALITY OF DEVICES

(30) Priorité: 17.12.2019 FR 1914668
(43) Date de publication de la demande: 09.02.2022
(73) Titulaire: Airbus Defence and Space SAS, 31402 Toulouse Cedex 4 (FR)
(72) Inventeur: BERTHOMIEU, Catherine, 31402 Toulouse cedex 4 (FR); CHOSSIERE, Carole, 31402 Toulouse cedex 4 (FR); WALKER, Andrew, 31402 Toulouse cedex 4 (FR); LEVALLOIS, Franck, 31402 Toulouse cedex 4 (FR); CLAUDET, Vincent, 31402 Toulouse cedex 4 (FR)
(74) Mandataire: Ipside
(86) Numéro de dépôt international: PCT/EP2020/085162
(87) Numéro de publication internationale: WO 2021/122184

(56) Documents cités:
- FR-A1- 2 642 224
- GB-A- 2 173 467
- US-A- 5 624 088
- US-A1- 2014 039 729
- US-A1- 2014 224 939

## Description

La présente invention s'inscrit dans le domaine de l'assemblage d'équipements spatiaux, notamment du type équipements électroniques, dans un satellite artificiel.

Plus particulièrement, la présente invention concerne un procédé d'assemblage d'une pluralité d'équipements sur une structure support d'un satellite artificiel, ainsi qu'une structure support de satellite artificiel sur laquelle sont assemblés une pluralité d'équipements. L'invention concerne également un satellite artificiel comportant une telle structure support.

La fabrication d'un satellite requiert l'assemblage dans ce dernier des différents équipements, en particulier équipements de type électroniques, qui sont nécessaires à l'accomplissement de sa mission. Ces différents équipements sont assemblés sur des structures du satellite, couramment dénommées murs. A l'heure actuelle, l'assemblage des équipements spatiaux sur les murs de satellites s'effectue équipement par équipement, ce qui s'avère long et contraignant. En outre, l'agencement des différents équipements sur un même mur doit être soigneusement réfléchi à l'avance, car toute modification de l'agencement de dernière minute est particulièrement chronophage et engendre des surcoûts de montage importants.

La présente invention vise à remédier aux inconvénients des procédés d'assemblage d'équipements spatiaux sur des murs de satellite, tels qu'ils sont proposés par l'art antérieur, notamment aux inconvénients exposés ci-avant, en proposant un procédé simple à mettre en oeuvre, et qui permette de réduire le temps nécessaire à l'assemblage des équipements sur le mur du satellite. Un objectif supplémentaire de l'invention est que ce procédé permette un agencement modulable des équipements sur le mur du satellite. L'invention vise également à ce que les moyens mis en oeuvre pour l'assemblage assurent les transferts thermiques entre les équipements et le mur du satellite. Cherchant à atteindre ces objectifs, les présents inventeurs ont envisagé de fixer différents équipements spatiaux, notamment les équipements appartenant à un même sous-ensemble fonctionnel, en atelier, sur une plaque support qui serait ensuite elle-même fixée au mur du satellite.

Cherchant à cet effet des solutions dans les techniques existantes d'assemblage par le biais de plaques intermédiaires, ils se sont cependant trouvés confrontés, pour la mise en oeuvre de ces techniques, à de nombreuses contraintes les rendant inapplicables dans le domaine particulier de l'intégration d'équipements sur un mur de satellite artificiel.

La fixation par vissage, sur le mur d'un satellite, d'une plaque sur laquelle ont été préalablement assemblés une pluralité d'équipements, nécessite par exemple, pour être solide, une épaisseur de plaque importante, d'au moins 4 mm. Une telle épaisseur s'avère trop pénalisante pour la masse du satellite lorsque la plaque présente de grandes dimensions, nécessaires pour qu'on puisse y assembler un nombre important d'équipements. La masse additionnelle liée aux plaques épaisses constitue ainsi un frein à leur généralisation à toute une plateforme dans le contexte des satellites artificiels. Les inventeurs ont plutôt recherché à assembler des équipements sur des plaques de fine épaisseur, inférieure ou égale à 3 mm, qui seraient ellesmêmes fixées sur les murs des satellites. Ils se sont intéressés pour cela aux techniques d'assemblage par collage. Parmi les techniques proposées par l'art antérieur pour le collage d'une plaque contre un panneau support, telles que le collage par pression sous poche à vide ou le collage par injection, aucune ne s'est cependant avérée applicable à une mise en oeuvre au sein d'un satellite, pour l'assemblage de plaques de grandes dimensions sur un mur de ce dernier. En effet, ces techniques nécessitent une bonne accessibilité au niveau des pièces à assembler, ce qui interdit leur utilisation pour l'assemblage de grandes plaques sur un mur de satellite, et/ou elles contraignent trop l'agencement des équipements sur la plaque. Par ailleurs, certaines de ces techniques de l'art antérieur ne permettent pas d'obtenir un calibrage satisfaisant du joint de colle intercalé entre la plaque et la structure support. Ces techniques sont en outre longues et fastidieuses à mettre en oeuvre.

Le document US 2014/224939 décrit une structure de satellite dans laquelle un panneau portant des modules d'équipement est couplé à des panneaux de radiateur.

Le document FR 2 642 224 décrit un procédé de fixation par collage d'un substrat de circuit électronique sur un support plan.

Les présents inventeurs ont maintenant développé un procédé d'assemblage particulier, mettant en oeuvre une plaque intercalaire, qui pallie les inconvénients ci-dessus, et qui permet d'atteindre les objectifs que s'est fixés la présente invention, dans le contexte particulier de l'assemblage d'équipements sur un mur de satellite.

Ainsi, selon un premier aspect, la présente invention concerne un procédé d'assemblage d'une pluralité d'équipements, notamment d'équipements électroniques, pouvant être aussi bien du type dissipatifs que non dissipatifs, sur une structure support d'un satellite artificiel. Ce procédé comprend des étapes successives de :
- fixation, par des organes de fixation, de chacun des équipements sur une première face d'une plaque, cette plaque étant percée d'un orifice traversant muni, au niveau de la première face de la plaque, d'un connecteur fluidique ;
- sur une deuxième face de la plaque opposée à la première face, dépôt d'un cordon périphérique continu d'une première composition adhésive polymérisable et, à l'intérieur du périmètre formé par le cordon périphérique, dépôt d'une pluralité de cordons intérieurs discontinus et disjoints d'une deuxième composition adhésive polymérisable, l'orifice traversant étant également inclus dans le périmètre formé par le cordon périphérique ;
- application de la deuxième face de la plaque, portant les cordons de composition(s) adhésive(s) polymérisable(s), contre une face continue de la structure support du satellite ;
- aspiration, via le connecteur fluidique, c'est-à-dire par l'intermédiaire du connecteur fluidique, de sorte à créer une dépression entre la plaque et la structure support, dans le volume délimité par le cordon périphérique ;
- polymérisation au moins partielle de chacune des compositions adhésives polymérisables, de sorte à former des joints adhésifs entre la deuxième face de la plaque et la structure support ; et
- interruption de l'aspiration.

Le dépôt des cordons de composition adhésive polymérisable est de préférence réalisé selon un profil tel que le cordon périphérique continu est périphérique à la zone de la deuxième face de la plaque qui est située en sous-face de la zone où sont fixés les équipements sur la première face de la plaque. Les cordons intérieurs sont quant à eux disposés, à l'intérieur du périmètre délimité par le cordon périphérique, de manière disjointe, c'est-à-dire de sorte à ne délimiter, ensemble et/ou avec le cordon périphérique, aucune zone fermée à l'intérieur de ce périmètre. De ce fait, l'air est libre de circuler dans toutes les zones du périmètre délimité par le cordon périphérique.

Par face continue de la structure support, on entend dans la présente description qu'au moins la zone de réception de la plaque sur la face de la structure support, c'est-à-dire la zone de cette face contre laquelle la plaque va être appliquée, est continue ; ou au moins que la zone de cette face contre laquelle le périmètre de la plaque délimité par le cordon périphérique va être appliquée, est continue.

Lors de l'application de la deuxième face de la plaque, portant les cordons de composition(s) adhésive(s) polymérisable(s), contre la face continue de la structure support, on comprend que ce sont les cordons de composition(s) adhésive(s) polymérisable(s), qui sont proéminents sur la deuxième face de la plaque, qui sont en réalité appliqués contre la face de la structure support. Il se crée alors, entre la plaque et la face de la structure support, un volume clos et étanche délimité à sa périphérie par le cordon périphérique.

Par connecteur fluidique, on entend un connecteur permettant le passage d'un fluide, notamment d'air, entre des zones / éléments qu'il connecte ou qu'il est destiné à connecter, plus précisément, dans le cadre de la présente invention, entre le volume clos situé entre la plaque et la structure support et délimité à sa périphérie par le cordon périphérique, et une zone ou un élément externe à ce volume.

Le connecteur fluidique de la plaque selon l'invention est plus précisément destiné à être connecté à un système d'aspiration, et il est de préférence configuré pour pouvoir être relié à un tel système d'aspiration, notamment à un tuyau appartenant à un tel système.

Pour la mise en oeuvre de l'étape d'aspiration, dans des modes de réalisation particuliers de l'invention, le procédé selon l'invention comprend une étape de connexion du connecteur fluidique à un système d'aspiration, puis la mise en marche de ce système d'aspiration, de sorte à aspirer une partie de l'air contenu dans le volume situé entre la plaque et la structure support et délimité à sa périphérie par le cordon périphérique, par le biais du connecteur fluidique. Le procédé selon l'invention comprend en outre de préférence, à l'issue de l'étape d'aspiration, une étape de déconnexion du système d'aspiration du connecteur fluidique.

De manière tout à fait avantageuse, lors de la mise en oeuvre de l'étape d'aspiration, il se crée entre la plaque et la face de la structure support, dans le volume délimité par le cordon périphérique coincé entre la plaque et la face de la structure support, une dépression qui est uniforme dans tout ce volume. On entend dans la présente description, par le terme dépression, de manière classique en elle-même, une pression inférieure à la pression environnante, dans le cas présent une pression inférieure à la pression atmosphérique.

La dépression ainsi créée entre la plaque et la face de la structure support tend à en rapprocher les surfaces l'une vers l'autre, par effet ventouse. Ce faisant, les cordons de composition(s) adhésive(s) polymérisable(s), comprimés entre ces surfaces, s'étalent. Lorsque ces cordons ont été déposés de manière uniforme, les joints adhésifs qui en résultent présentent alors avantageusement une hauteur uniforme. Ce calibrage des cordons satisfait avantageusement les exigences du domaine des satellites. Le temps mis par les cordons de composition(s) adhésive(s) polymérisable(s) pour atteindre leur étalement maximal dépend notamment de la viscosité de la / des composition(s) adhésive(s) polymérisable(s) et de l'amplitude de la dépression créée entre la plaque et la structure support. Préférentiellement, les conditions opératoires du procédé sont choisies pour que ce temps soit de quelques dizaines de minutes, notamment d'environ 20 minutes. Pour la grande majorité des compositions adhésives polymérisables, la polymérisation a alors à peine commencé, si bien qu'elle n'interfère pas avec l'étalement des cordons.

La polymérisation des compositions adhésives polymérisables est de préférence réalisée jusqu'à atteindre un taux de polymérisation d'au moins 80 % avant l'interruption de l'aspiration. Les conditions de temps et de température permettant d'obtenir un tel degré de polymérisation sont aisément déterminables par l'homme du métier, en fonction de la ou des compositions adhésives polymérisables particulières utilisées. Lorsque ces compositions sont disponibles dans le commerce, les paramètres optimaux pour la polymérisation sont indiqués dans les fiches techniques des fournisseurs.

Les joints adhésifs formés par le procédé selon l'invention assurent la fixation de la plaque portant les équipements sur la structure support du satellite.

L'assemblage obtenu répond avantageusement aux exigences mécaniques, notamment de raideur et tenue en contrainte, et le cas échéant thermiques, requises pour le satellite. Ceci est rendu possible avec un minimum de matière, puisque le procédé selon l'invention peut utiliser, et est particulièrement adapté à, des plaques de très fine épaisseur, inférieure ou égale à 3 mm et notamment d'environ 2 mm.

Au cours du procédé selon l'invention, le cordon périphérique joue à la fois le rôle de précurseur d'un joint adhésif structural, et de maintien de l'étanchéité dans le volume entre la plaque et la structure support permettant la création de la dépression entre ces éléments.

La plaque mise en oeuvre dans ce procédé peut présenter de grandes dimensions, par exemple des dimensions supérieures ou égales à 500 mm pour la longueur et/ou 500 mm pour la largeur, sans nuire à l'efficacité et à la fiabilité de l'assemblage. Une plaque de grandes dimensions offre en outre, dans le cas préférentiel où elle est formée en une matière thermiquement conductrice, une surface dissipative suffisante pour permettre les échanges thermiques entre les équipements et la structure support.

Un sous-ensemble fonctionnel d'équipements spatiaux peut ainsi être fixé sur une seule et même plaque. Cette fixation peut être réalisée en atelier, et le sous-ensemble fonctionnel peut avantageusement être prétesté en atelier, préalablement à son assemblage dans le satellite. L'intégration des équipements dans le satellite est ensuite effectuée rapidement, par collage de la plaque, ce collage étant assisté par aspiration conformément à l'invention, contre la face de la structure support du satellite.

Le procédé selon l'invention permet ainsi de diminuer les délais d'intégration des équipements dans le satellite, et plus généralement de diminuer le temps de cycle dans les chaines de montage des satellites, ainsi que les coûts associés.

Le procédé selon l'invention permet en outre une grande modularité de l'agencement des équipements sur la structure support. Un changement de conception de dernière minute requiert uniquement un changement de la plaque entière, et non un déplacement individuel de chaque équipement déjà fixé dans le satellite.

La conception, la fabrication et la justification de la structure support sont également avantageusement simplifiées, car la présence d'inserts pour la fixation de chaque équipement n'est plus nécessaire, et la plaque peut faire office de renfort, si bien que la structure support sur laquelle elle est fixée peut par exemple consister en un panneau composite en nid d'abeille à fine peau en aluminium. La face de la structure support destinée à recevoir la plaque doit être continue, au moins dans la zone de réception de la plaque, et de préférence sensiblement plane. Lorsque la face de la structure support sur laquelle la plaque doit être assemblée n'est initialement pas continue, le procédé selon l'invention comprend une étape de bouchage des orifices qui y sont présents, au moins dans la zone de réception de la plaque, afin d'assurer son étanchéité et de permettre la création d'une dépression entre cette face et la plaque.

Le procédé selon l'invention, tout en ne nécessitant aucun élément d'étanchéité supplémentaire usuellement utilisé pour les collages sous vide, permet avantageusement d'effectuer un collage structural, et le cas échéant conducteur thermique, sur une structure support de satellite, de plaques de grandes dimensions, équipées d'équipements lourds, dont le poids peut s'élever jusqu'à 2 kg par exemple, en garantissant une épaisseur de colle homogène et calibrée entre la plaque et la structure support, permettant d'optimiser la performance de la colle et de remplir les exigences particulièrement sévères du domaine spatial.

Le procédé selon l'invention peut en outre répondre à l'une ou plusieurs des caractéristiques décrites ci-après, mises en oeuvre isolément ou en chacune de leurs combinaisons techniquement opérantes.

La plaque mise en oeuvre peut être formée en tout matériau ou mélange de matériaux, ces matériaux étant préférentiellement légers, de préférence thermiquement conducteurs, et compatibles avec les environnements mécaniques auxquels la plaque sera exposée en opération du satellite.

Préférentiellement, la plaque est formée en aluminium et/ou en alliage d'aluminium.

Son épaisseur est de préférence inférieure ou égale à 3 mm, et préférentiellement inférieure ou égale à 2 mm, par exemple d'environ 2 mm.

Elle peut présenter une longueur de 500 mm ou plus, et/ou une largeur de 500 mm ou plus. Bien entendu, le procédé selon l'invention s'applique également tout aussi bien aux plaques de plus petites dimensions.

La plaque mise en oeuvre selon l'invention présente en outre de préférence une surface continue et sensiblement plane, aux tolérances de fabrication près. La plaque peut être pourvue d'un seul orifice traversant, qui est associé à un connecteur fluidique, ou à une pluralité de tels orifices, chacun étant associé à un tel connecteur fluidique. Dans une telle configuration, l'ensemble des connecteurs fluidiques sont mis en oeuvre simultanément pour l'étape d'aspiration, ou ceux qui ne le sont pas sont bouchés de manière étanche. Outre le ou les orifices traversants nécessaires pour la mise en oeuvre de l'étape d'aspiration, la plaque ne comprend préférentiellement aucun trou traversant, sauf à proximité de ses bords périphériques. Le procédé selon l'invention prévoit alors que le cordon périphérique soit déposé de sorte à ce que le périmètre qu'il délimite n'englobe pas ces trous. Autrement, le procédé selon l'invention comporte une étape préalable de bouchage étanche des trous traversants de la plaque. De même, le procédé selon l'invention peut comprendre, si cela s'avère nécessaire, une étape d'étanchéification de la fixation des équipements sur la plaque.

De la même façon, le procédé selon l'invention peut comprendre une étape d'étanchéification de la face de la structure support destinée à recevoir la plaque, de sorte à pouvoir créer une dépression entre la plaque et cette face de la structure support.

Toute combinaison d'équipements spatiaux peut être fixée sur la plaque. Préférentiellement, les équipements participant à une même fonction du satellite sont regroupés sur une même plaque.

La fixation des équipements sur la plaque peut être réalisée par tous organes de fixation classiques en eux-mêmes. Préférentiellement, ces organes de fixation ne dépassent pas de la surface de la deuxième face de la plaque, ou alors très peu, de préférence d'une hauteur inférieure ou égale à 0,1 mm. Les organes de fixation peuvent notamment s'insérer dans les orifices traversants ou non traversants s'étendant dans l'épaisseur de la plaque, depuis sa première face. Il peut notamment s'agir de vis se vissant dans de tels orifices taraudés.

Le connecteur fluidique peut quant à lui par exemple être fixé par collage contre la première face de la plaque, autour de l'orifice traversant. Il peut par exemple se présenter sous forme d'un corps rigide creux, se fixant à la plaque au niveau d'une première extrémité, autour de l'orifice traversant, et pourvu à une deuxième extrémité de moyens pour son assemblage, de préférence son assemblage réversible, notamment par coopération mécanique, à un système d'aspiration.

Dans des modes de mise en oeuvre préférés de l'invention, la première composition adhésive polymérisable et la deuxième composition adhésive polymérisable sont identiques.

Les compositions adhésives polymérisables mises en oeuvre dans le procédé selon l'invention sont de préférence choisies parmi les résines thermodurcissables, préférentiellement à caractère thixotropique. Préférentiellement, la ou les compositions adhésives polymérisables sont choisies pour former, après polymérisation / réticulation, un joint adhésif présentant au moins une, de préférence plusieurs et préférentiellement l'ensemble, des propriétés suivantes :
- de bonnes propriétés de tenue mécanique, notamment une contrainte à la rupture en cisaillement supérieure à 15 MPa et une contrainte à la rupture en arrachement supérieure à 5 MPa, à température ambiante, ceci dans une large plage de température, pouvant aller de -55 °C à 180 °C par exemple ;
- une conductivité thermique d'au moins 0,2 W/m.°C ;
- une résistance élevée à la compression ;
- et une bonne facilité d'utilisation.

La viscosité de la ou des compositions adhésives polymérisables est de préférence choisie pour être suffisamment élevée pour que ces compositions soient faciles à appliquer sous forme de fins cordons, notamment de hauteur inférieure ou égale à 0,2 mm, et qu'elles ne s'écoulent pas au repos après leur application en cordons sur la plaque, ceci y compris lorsque la plaque est inclinée ou placée à la verticale, ou même placée à l'horizontale, la deuxième face de la plaque, portant les cordons de composition(s) adhésive(s), étant dirigée vers le haut ou même vers le bas, tout en permettant l'étalement de ces cordons sous l'effet de forces de cisaillement, exercées sur eux lors de l'étape d'aspiration du procédé.

Les compositions adhésives polymérisables peuvent aussi bien être du type mon-composant que bi-composants, l'un des composants pouvant alors être un durcisseur ou catalyseur de polymérisation.

Les compositions adhésives polymérisables mises en oeuvre selon l'invention sont de préférence choisies pour débuter leur polymérisation après au moins 1 heure, de préférence après au moins 2 heures, à l'air libre et température ambiante ; et, par exemple, présenter un temps pour atteindre une polymérisation totale d'au moins 1 jour à 25 °C.

Les compositions adhésives polymérisables selon l'invention peuvent par exemple être choisies parmi les résines de type acrylate, à base d'acrylates et/ou méthacrylates, de type polyester, époxyde ou polyuréthane. Préalablement à l'étape de fixation des équipements sur la plaque, le procédé selon l'invention peut comporter une étape de préparation de surface de la plaque, au moins de sa deuxième face, et le cas échéant de sa première face, en vue d'améliorer le collage ultérieur sur la structure support et la tenue mécanique de l'assemblage obtenu.

Cette étape de préparation de surface peut être réalisée de toute manière classique en elle-même, notamment par nettoyage avec un solvant, tel que l'alcool isopropylique, le cas échéant après une étape d'abrasion de la surface ; préférentiellement, elle ne comporte cependant pas de décapage de la surface de la deuxième face de la plaque.

Les faces de la plaque et de la structure support destinées à être fixées l'une à l'autre peuvent également avoir été enduites, préalablement à la mise en oeuvre du procédé selon l'invention, notamment au cours de leur procédé de fabrication, par un revêtement primaire promoteur d'adhésion.

Dans des modes de mise en oeuvre particuliers de l'invention, avant l'étape de dépôt de cordons de composition adhésive polymérisable sur la plaque, ou après cette étape, mais avant l'application de la deuxième face de la plaque contre la face de la structure support, le procédé comprend la fixation sur cette deuxième face d'une pluralité de gabarits de hauteur inférieure à la hauteur des cordons de composition(s) adhésive(s) polymérisable(s). Ces gabarits constituent, au cours de l'étape d'aspiration ultérieure, des butées imposant un écart minimal entre la plaque et la face de la structure support vers laquelle elle est attirée par l'effet ventouse provoqué par l'aspiration. La hauteur des gabarits correspond ainsi à la hauteur souhaitée pour les joints adhésifs formés lors de la mise en oeuvre du procédé selon l'invention. A titre d'exemple, la hauteur des gabarits peut être égale à 0,1 mm.

Ces gabarits sont de préférence répartis sur toute la surface de la deuxième face de la plaque, de préférence à l'intérieur du périmètre délimité par le cordon périphérique. Ils peuvent notamment consister en des pastilles de ruban adhésif.

L'étape de dépôt du cordon périphérique et l'étape de dépôt des cordons intérieurs peuvent être réalisées simultanément, ou dans n'importe quel ordre. Préférentiellement, les cordons intérieurs sont déposés avant le cordon périphérique, suivant un profil préétabli tenant compte de la configuration particulière des équipements et de leur positionnement visé sur la structure support.

Tout moyen classique en lui-même de dépôt d'un cordon de composition adhésive polymérisable peut être mis en oeuvre à cet effet, par exemple un pistolet applicateur.

Les cordons intérieurs et le cordon périphérique peuvent être de même hauteur. Ils peuvent être calibrés selon un même calibre, c'est-à-dire de sorte à présenter la même forme en section et la même hauteur. Cette hauteur est choisie pour permettre d'obtenir, après étalement et polymérisation, des joints adhésifs de la hauteur souhaitée, préférentiellement inférieure ou égale à 0,2 mm, par exemple comprise entre 0,1 mm et 0,2 mm.

Dans des modes de mise en oeuvre alternatifs de l'invention, les cordons intérieurs et le cordon périphérique ne présentent pas la même forme et/ou les mêmes dimensions. Dans une telle variante, le cordon périphérique est de préférence déposé sur la deuxième face de la plaque de telle sorte que sa hauteur soit supérieure à celle des cordons intérieurs. Une telle caractéristique améliore avantageusement l'étanchéité du volume situé entre la plaque et la structure support, permettant la création ultérieure d'une dépression entre ces éléments.

Dans des modes de mise en oeuvre particuliers de l'invention, au moins un cordon intérieur est disposé au droit de chacun des équipements fixés sur la première face de la plaque, de préférence au niveau des organes de fixation associés à chaque équipement, ou à proximité de ces organes de fixation, de sorte à assurer que le cordon s'étende sous ces organes de fixation après son étalement sous l'effet de l'aspiration. Une telle caractéristique améliore avantageusement la tenue mécanique de l'assemblage, tout en assurant un bon transfert des efforts mécaniques entre les équipements et la structure support.

En outre, dans les configurations dans lesquelles la ou les compositions adhésives polymérisables sont thermiquement conductrices, un tel positionnement de certains des cordons intérieurs sous, ou à proximité immédiate, des organes de fixation des équipements, assure un transfert efficace des flux de chaleur entre les équipements et la structure support, ainsi qu'une bonne dissipation thermique sur toute la surface de la plaque.

Le nombre de cordons intérieurs déposés sur la deuxième face de la plaque, et l'étendue de la surface de la plaque recouverte par ces cordons après leur étalement sous l'effet de l'aspiration, dépendent des performances attendues en termes de résistance mécanique et de transfert thermique de l'assemblage formé. Il entre dans les compétences de l'homme du métier de les déterminer, pour chaque cas particulier, en prenant en compte le fait que la surface de plaque encollée doit être suffisamment importante pour assurer ces performances, tout en permettant la création entre la plaque et la structure support d'une dépression suffisante pour obtenir le degré d'étalement des cordons visé.

Dans les configurations dans lesquelles la structure support contient des caloducs intégrés, le dépôt des cordons intérieurs et l'application de la deuxième face de la plaque contre la face de la structure support sont de préférence réalisés de manière telle qu'au moins un des cordons intérieurs recouvre ou croise un caloduc, de préférence perpendiculairement à ce dernier. Une telle caractéristique a pour avantage de maximiser la dissipation des flux thermiques générés par les équipements.

Préférentiellement, ces étapes sont réalisées de telle sorte qu'au moins un, et de préférence plusieurs, cordons intérieurs croise(nt) une pluralité des caloducs, de préférence perpendiculairement à ces derniers. On assure ainsi avantageusement un drainage des flux thermiques même en mode de fonctionnement dégradé de dysfonctionnement d'un caloduc.

L'étape d'application de la deuxième face de la plaque contre la structure support, qui sera qualifiée dans la présente description d'étape d'accostage, peut être réalisée dans toute position, la plaque étant disposée à l'horizontale, à la verticale ou inclinée par rapport à la verticale.

Dans des modes de mise en oeuvre particuliers de l'invention, le procédé comprend une étape de bridage de la plaque contre la structure support, préalablement à l'application de l'aspiration, de sorte à interdire les mouvements de la plaque vis-à-vis de la structure support, autres que pour son rapprochement de cette dernière, et éviter ainsi toute dégradation des cordons de composition adhésive polymérisable, notamment du cordon périphérique, qui doit assurer l'étanchéité de l'assemblage. Le bridage peut être réalisé au moyen de tout outillage classique en lui-même. Il peut notamment mettre en oeuvre des tiges se fixant d'une part à la structure support, et d'autre part à un panneau disposé en arrière de la plaque, à l'opposé de la structure support, et passant par des trous traversants ménagés dans la plaque à cet effet, à l'extérieur du périmètre délimité par le joint périphérique sur la surface de cette dernière.

Dans des modes de mise en oeuvre particuliers de l'invention, l'aspiration est appliquée, par un tuyau d'aspiration raccordé au connecteur fluidique, de sorte à obtenir entre la plaque et la structure support une pression relative comprise entre -0,1 et -0,75 bars, de préférence comprise entre -0,4 et -0,6 bars. L'aspiration est préférentiellement maintenue pendant toute la durée de l'étape de polymérisation au moins partielle des compositions adhésives polymérisables, de préférence jusqu'à ce que cette polymérisation soit totale ou au moins qu'elle atteigne un taux de 80 %. Une telle caractéristique évite la formation, dans les joints adhésifs, de trous ou défauts qui seraient susceptibles de diminuer la tenue mécanique de l'assemblage.

A l'issue du procédé selon l'invention, l'outillage de bridage est préférentiellement retiré. La plaque à laquelle sont fixés les équipements spatiaux est alors solidement assemblée, par collage, à la structure support du satellite.

Un autre aspect de l'invention concerne une structure support de satellite artificiel, sur laquelle sont assemblés une pluralité d'équipements, en particulier d'équipements électroniques, et qui est susceptible d'être obtenue par un procédé selon la présente invention, tel que défini ci-avant.

Selon l'invention, les équipements sont fixés par des organes de fixation sur une première face d'une plaque, et une deuxième face de cette plaque, opposée à la première face, est fixée contre la face de la structure support par un ensemble de joints adhésifs, et préférentiellement uniquement par cet ensemble de joints adhésifs. Cet ensemble de joints adhésifs comprend un joint adhésif périphérique continu et, à l'intérieur du périmètre formé par ce joint adhésif périphérique, une pluralité de joints adhésifs intérieurs discontinus et disjoints.

Dans des modes de réalisation particuliers de l'invention, la plaque comporte en outre un orifice traversant, débouchant au niveau de sa deuxième face à l'intérieur du périmètre délimité par le joint adhésif périphérique, et autour duquel est le cas échéant fixé, au niveau de la première face de la plaque, un connecteur fluidique apte à être raccordé à un système d'aspiration. La plaque peut le cas échéant comporter une pluralité de tels orifices traversants. Ce ou ces orifices traversants peuvent autrement avoir été bouchés, notamment par une résine ou une pâte adéquate.

La structure support selon l'invention peut répondre à l'une ou plusieurs des caractéristiques décrites ci-avant en référence au procédé d'assemblage selon l'invention, qu'il s'agisse de caractéristiques portant sur les équipements spatiaux, sur la plaque, sur les joints adhésifs ou sur la structure support en elle-même.

Dans des modes de réalisation particuliers de l'invention, la plaque présente une épaisseur, mesurée entre sa première face et sa deuxième face, comprise entre 1 et 3 mm, notamment d'environ 2 mm. Sa longueur et/ou sa largeur sont en outre de préférence supérieures ou égales à 500 mm.

Les joints adhésifs sont de préférence tous formés de la même matière, et préférentiellement en résine thermodurcie.

Ces joints présentent sensiblement la même hauteur, aux tolérances de planéité de la deuxième face de la plaque et de la face de la structure support près. Ils sont préférentiellement tous calibrés selon le même calibre. Ils présentent par exemple une forme aplatie, de hauteur comprise entre 0,1 et 0,2 mm et de largeur comprise entre 10 et 35 mm, par exemple d'environ 30 mm, ou encore comprise entre 10 et 25 mm.

Préférentiellement, au moins un joint adhésif intérieur est disposé au droit de chacun des équipements, de préférence au niveau des organes de fixation associés à cet équipement, c'est-à-dire dans une position recouvrant la partie inférieure de ces organes, ou au droit de ces organes.

Dans des modes de réalisation particuliers de l'invention, la structure support contient des caloducs intégrés, et au moins un des joints adhésifs croise un de ces caloducs, de préférence perpendiculairement à ce caloduc. Préférentiellement, au moins un, de préférence plusieurs, des joints adhésifs croise(nt) une pluralité des caloducs, de préférence perpendiculairement à ces derniers.

Un autre aspect de l'invention concerne un satellite artificiel comportant une structure support selon l'invention, cette structure pouvant répondre à l'une ou plusieurs des caractéristiques décrites ci-avant ou ci-après.

Les caractéristiques et avantages de l'invention apparaîtront plus clairement à la lumière des exemples de mise en oeuvre ci-après, fournis à simple titre illustratif et nullement limitatifs de l'invention, avec l'appui des figures 1 à 13, dans lesquelles :
La figure 1 représente de manière schématique une structure support de satellite, une plaque et des équipements spatiaux destinés à être assemblés par un procédé d'assemblage conforme à l'invention.
La figure 2 représente un diagramme à blocs illustrant les principales étapes d'un procédé d'assemblage conforme à l'invention.
La figure 3 montre un ensemble de plaque et équipements spatiaux obtenu à l'issue d'une première étape d'un procédé d'assemblage conforme à l'invention.
La figure 4 montre la deuxième face de la plaque de la figure 3.
La figure 5 montre la deuxième face de la plaque de la figure 4 après fixation de gabarits sur sa surface conformément à l'invention.
La figure 6 représente la deuxième face de la plaque de la figure 5 après dépôt de cordons intérieurs de composition adhésive polymérisable sur sa surface conformément à l'invention.
La figure 7 représente la deuxième face de la plaque de la figure 6 après dépôt d'un cordon périphérique de composition adhésive polymérisable sur sa surface conformément à l'invention.
La figure 8 représente une vue en coupe selon A-A de la plaque de la figure 7.
La figure 9 représente, en vue en coupe, la plaque de la figure 8 bridée à la structure support, conformément à l'invention, une aspiration étant appliquée de sorte à créer une dépression entre la plaque et la structure support.
La figure 10 représente, en vue en coupe, l'ensemble de la figure 9, après un temps d'aspiration.
La figure 11 montre une vue de la deuxième face de la plaque de l'ensemble représenté sur la figure 10.
La figure 12 représente, en vue en coupe, l'ensemble montré sur la figure 10 après retrait de l'outillage de bridage conformément à l'invention.
La figure 13 représente de manière schématique un satellite artificiel comportant une structure support sur laquelle sont assemblés une pluralité d'équipements, conforme à la présente invention

On notera d'ores et déjà que les figures ne sont pas à l'échelle. En particulier, afin de faciliter la compréhension de l'invention, certains éléments sont artificiellement grossis par rapport à d'autres, sur certaines des figures ou sur toutes les figures, et les échelles pour la représentation d'un même élément ne sont pas toujours identiques sur toutes les figures.

Le procédé selon l'invention réalise l'assemblage, sur une structure support 21 d'un satellite artificiel 20, d'une pluralité d'équipements spatiaux 30, 30'. Ces équipements peuvent être de tout type classique en-lui-même pour la réalisation de diverses fonctions du satellite. La structure support 21 peut quant à elle également être de tout type classiquement utilisé pour porter des équipements spatiaux d'un satellite. On désigne communément une telle structure support par le terme de « mur » du satellite. Elle peut être formée en tout matériau classique en lui-même, notamment en matériau composite ou en matériau métallique.

Pour réaliser l'assemblage, le procédé selon l'invention met en oeuvre une plaque 40.

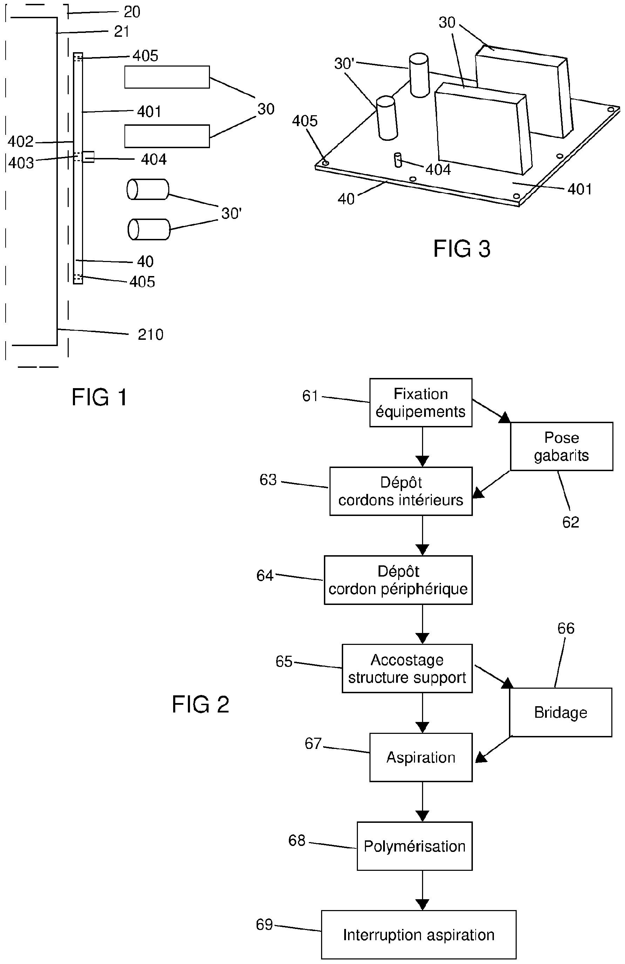

Ces différents éléments sont illustrés, séparés les uns des autres, sur la figure 1. Sur cette figure, le satellite 20 est représenté, de manière schématique, par un cadre en pointillés.

La structure support 21 comporte une face 210 destinée à recevoir la plaque 40, dont au moins la zone de réception de la plaque est continue et sensiblement plane.

La plaque 40 présente préférentiellement une fine épaisseur, c'est-à-dire une épaisseur inférieure ou égale à 3 mm. Elle présente par exemple une épaisseur de 2 mm. Elle est en outre préférentiellement de grandes dimensions, de sorte à pouvoir supporter un nombre important d'équipements du satellite, par exemple l'ensemble des équipements participant à un bloc fonctionnel ou sous-fonctionnel.

Dans l'exemple de réalisation montré sur les figures, la plaque 40 présente une forme rectangulaire, une telle forme n'étant en aucun cas limitative de l'invention. La plaque 40 peut présenter toute forme, notamment adaptée à la configuration particulière du satellite 20 et de la structure support 21.

La plaque 40 présente de préférence des dimensions supérieures ou égales à 500 mm pour la longueur, et/ou à 500 mm pour la largeur.

Elle peut être constituée en tout matériau adapté à une mise en oeuvre dans le domaine spatial. Ce matériau est préférentiellement léger, et de préférence thermiquement conducteur. L'aluminium et ses alliages sont particulièrement préférés dans le cadre de l'invention.

La plaque 40 comporte une première face 401, destinée à recevoir les équipements 30, 30', et une deuxième face opposée 402. Elle présente de préférence, au niveau de chacune de ses faces 401, 402, une surface continue et sensiblement plane, aux tolérances de fabrication près.

La plaque 40 est percée dans son épaisseur d'un orifice traversant 403, préférentiellement localisé dans sa partie centrale, à distance des bords périphériques de la plaque 40. Un connecteur fluidique 404 est fixé autour de cet orifice 403, sur la première face 401 de la plaque 40. Dans l'exemple de réalisation représenté sur les figures, ce connecteur fluidique 404 se présente sous forme d'un manchon, qui est fixé sur la première face 401 de la plaque 40 au niveau d'une première extrémité. Cette fixation est notamment réalisée par collage. Le connecteur fluidique 404 est configuré, au niveau de sa deuxième extrémité, pour pouvoir être connecté à un système d'aspiration, plus particulièrement à un tuyau d'un système d'aspiration.

Dans le mode de réalisation représenté sur les figures, la plaque 40 comporte un unique orifice traversant 403 et un unique connecteur fluidique 404. Un tel mode de réalisation n'est cependant nullement limitatif de l'invention, et la plaque 40 peut être munie de plusieurs couples orifice traversant 403 / connecteur fluidique 404, chacun de ces couples étant mis en oeuvre de la même manière.

La plaque 40 comporte en outre de préférence une pluralité de trous traversants 405, répartis le long de ses bords périphériques, et configurés pour recevoir des tiges d'un outillage de bridage.

Les principales étapes d'un procédé conforme à l'invention sont illustrées sur la figure 2. Schématiquement, le procédé comprend les étapes successives suivantes. Chacune de ces étapes sera décrite de manière plus détaillée plus avant dans la présente description, avec l'appui des figures 3 à 13, qui illustrent différents stades d'avancement successifs du procédé selon l'invention.

Le procédé d'assemblage selon l'invention comprend, en première étape, la fixation 61 des équipements spatiaux 30, 30' sur la première face 401 de la plaque 40.

Préalablement ou postérieurement à cette étape, il peut comprendre une étape de préparation de surface de la plaque 40, au moins de sa deuxième face 402. Ce traitement de surface peut consister en un nettoyage, notamment par un solvant, en particulier par de l'alcool isopropylique, le cas échéant précédé par une abrasion de la surface.

Ensuite, le procédé comprend une étape optionnelle 62 de pose de gabarits sur la deuxième face 402 de la plaque 40. Cette étape peut être réalisée préalablement, ou postérieurement, aux étapes suivantes 63 et 64, qui sont le dépôt de cordons de composition(s) adhésive(s) polymérisable(s) sur la deuxième face 402 de la plaque 40, respectivement de cordons intérieurs pour l'étape 63 et d'un cordon périphérique pour l'étape 64. Le dépôt 64 du cordon périphérique peut être réalisé avant, après ou simultanément au dépôt 63 des cordons intérieurs. Préférentiellement, le dépôt 64 du cordon périphérique est réalisé après le dépôt 63 des cordons intérieurs.

L'étape 62 de pose de gabarits peut autrement être intercalée entre les étapes 63 et 64 de dépôt des cordons de composition(s) adhésive(s) polymérisable(s) sur la deuxième face 402 de la plaque 40.

Après le dépôt 63, 64 des cordons de composition(s) adhésive(s) polymérisable(s) sur la deuxième face 402 de la plaque 40, le procédé comprend une étape 65 d'application de la deuxième face 402 de la plaque 40, portant les cordons de composition adhésive, contre la face 210 de la structure support 21. Cette étape est qualifiée dans la présente description d'étape d'accostage de la structure support.

Le procédé comprend ensuite une étape optionnelle 66 de bridage de la plaque 40 à la structure support 21.

Une aspiration 67 est ensuite appliquée, par le biais du connecteur fluidique 404, entre la plaque 40 et la structure support 21, de sorte à provoquer le rapprochement de ces dernières l'une de l'autre, et à provoquer l'étalement des cordons de composition(s) adhésive(s) polymérisable(s). Il est ensuite procédé à la polymérisation 68 de la ou des composition(s) adhésive(s) polymérisable(s), pour former des joints adhésifs entre la plaque 40 et la structure support 21.

L'étape finale 69 du procédé consiste à interrompre l'aspiration, ainsi que, le cas échéant, procéder au débridage de la plaque 40 et de la structure support 21.

Chacune de ces étapes est décrite de manière plus détaillée ci-après.

Dans la première étape 61 du procédé selon l'invention, les équipements spatiaux 30, 30' sont fixés sur la première face 401 de la plaque 40, comme montré sur la figure 3. Dans l'exemple de réalisation présentement décrit, quatre équipements 30, 30' sont fixés sur la plaque 40. Un tel nombre n'est bien entendu aucunement limitatif de l'invention.

Le positionnement des équipements 30, 30' les uns par rapport aux autres sur la plaque 40 est dicté par les impératifs particuliers de la mission visée pour le satellite 20, et entre dans les compétences de l'homme du métier. Les équipements 30, 30' sont préférentiellement positionnés à distance des bords périphériques de la plaque 40, et de sorte à ne pas gêner la connexion du connecteur fluidique 404 à un système d'aspiration.

La fixation des équipements 30, 30' sur la plaque 40 peut être réalisée au moyen de tout organe de fixation 31 adapté à cet effet, par exemple au moyen de vis ou goujons se fixant dans l'épaisseur de la plaque 40. Préférentiellement, les organes de fixation 31 ne dépassent pas de la deuxième face 402 de la plaque 40, ou seulement d'une hauteur inférieure ou égale à 0,1 mm. La fixation est réalisée de manière étanche au niveau de la deuxième face 402 de la plaque 40.

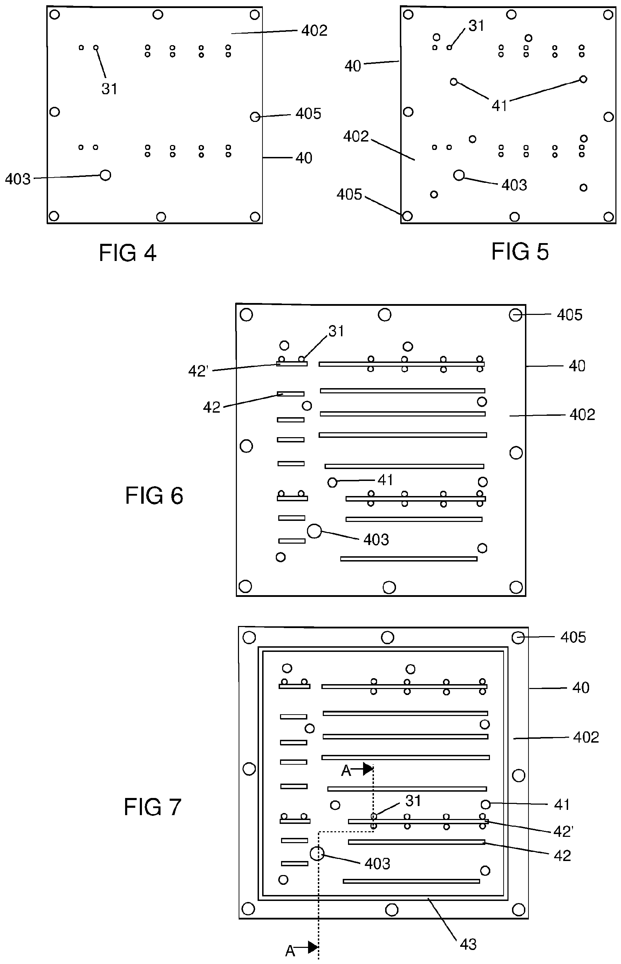

La deuxième face 402 de la plaque 40, obtenue à l'issue de l'étape 61 de fixation des équipements 30, 30' sur la plaque 40, est montrée sur la figure 4. On y voit l'extrémité inférieure des organes de fixation 31, l'orifice traversant 403 destiné à la mise en oeuvre de l'aspiration et les trous traversants 405 pour le bridage, distribués le long des bords périphériques de la plaque 40, sur tout le contour de cette dernière.

Des gabarits 41 sont ensuite fixés (étape 62) sur la deuxième face 402 de la plaque 40. Ces gabarits, qui ont pour fonction de régler la hauteur finale des joints adhésifs qui seront formés entre la plaque 40 et la structure support 21, présentent une hauteur correspondant à la hauteur finale souhaitée pour ces joints adhésifs. Cette hauteur est notamment comprise entre 0,1 et 0,2 mm. Elle est de préférence égale à 0,1 mm.

Les gabarits 41 peuvent notamment être constitués de pastilles de ruban adhésif. Ils sont répartis sur toute la surface de la deuxième face 402 de la plaque 40, comme montré sur la figure 5.

Des cordons de composition(s) adhésive(s) polymérisable(s) sont ensuite déposés sur la deuxième face 402 de la plaque 40.

L'ensemble des cordons peuvent être formés de la même composition, ou des compositions différentes peuvent être mises en oeuvre pour des groupes de cordons différents.

La ou les compositions adhésives polymérisables sont de préférence choisies pour : former, après polymérisation, des joints adhésifs présentant une bonne tenue mécanique, compatible avec les exigences du domaine spatial, et thermiquement conducteurs ; pour présenter une bonne facilité d'utilisation, et un temps de début de polymérisation d'au moins 1 heure à l'air libre et à la température ambiante. Leur viscosité Brookfield, mesurée à 25 °C, est de préférence comprise entre 1000 et 2000 poise, de préférence entre 1200 et 1800 poise, et préférentiellement entre 1400 et 1800 poise, de sorte que d'une part, les cordons déposés sur la plaque 40 ne s'écoulent pas, et d'autre part, ils peuvent être écrasés sous l'effet d'une force importante exercées sur eux par le rapprochement de la plaque 40 et de la structure support 21 provoqué par l'application de l'aspiration 67.

La ou les compositions adhésives polymérisables sont notamment choisies parmi les compositions précurseurs d'adhésifs de type polyuréthane, polyacrylate, époxyde, polyester, etc.

Dans l'exemple de réalisation décrit ci-après, pour plus de commodité, on se place dans l'exemple particulier de mise en oeuvre d'une seule et même composition adhésive polymérisable pour l'ensemble des cordons, un tel mode de réalisation n'étant toutefois nullement limitatif de l'invention.

Le dépôt des différents cordons de composition adhésive polymérisable sur la deuxième face 402 de la plaque 40 est par exemple réalisé au moyen d'un pistolet applicateur classique en lui-même. Dans des variantes de l'invention, les cordons sont tous déposés selon le même calibre, c'est-à-dire de sorte que les cordons présentent tous la même hauteur et la même forme en section transversale. Dans d'autres variantes de l'invention, certains des cordons, en particulier le cordon périphérique, sont plus hauts que les autres.

A titre d'exemple, les cordons de composition adhésive polymérisable présentent une section semi-circulaire, avec un diamètre de 3 mm, qui est tel que la hauteur des cordons, après un étalement de 30 mm provoqué par l'étape d'aspiration 67, présentent une hauteur comprise entre 0,1 et 0,2 mm, selon les tolérances de planéité de la surface de la plaque 40 et de la surface de la face 210 de la structure support 21 qui sont collées l'une à l'autre lors de la mise en oeuvre du procédé selon l'invention.

Le procédé selon l'invention comprend le dépôt 63, sur la deuxième face 402 de la plaque 40, d'une pluralité de cordons dits intérieurs 42, 42' de composition adhésive polymérisable, ces cordons étant discontinus et disjoints, et étant disposés à distance des bords périphériques de la plaque 40. Bien entendu, aucun de ces cordons 42, 42' ne bouche l'orifice traversant 403.

Au moins une partie des cordons intérieurs, désignés ici par la référence 42', sont déposés sous les interfaces de fixation des équipements 30, 30' sur la plaque 40, c'est-à-dire sous les organes de fixation 31, ou à proximité immédiate de la sous-face de ces organes de fixation 31, comme montré sur la figure 6. Les autres cordons intérieurs 42 sont positionnés à différents emplacements sur la deuxième face 402 de la plaque 40, répartis sur tout sa surface. Dans l'exemple de réalisation montré sur les figures, les cordons intérieurs 42, 42' sont tous disposés parallèlement les uns aux autres. Une telle configuration n'est nullement limitative de l'invention.

Le procédé selon l'invention comprend ensuite le dépôt 64 d'un cordon périphérique 43 de composition adhésive polymérisable sur la deuxième face 402 de la plaque 40. Ce cordon périphérique 43 est de préférence disposé à proximité des bords périphériques de la plaque 40, de sorte à délimiter un périmètre contenant les cordons intérieurs 42, 42', l'orifice traversant 403 et les gabarits 41, comme montré sur la figure 7. Les trous traversants 405 doivent cependant se trouver en dehors de ce périmètre, entre le cordon périphérique 43 et les bords de la plaque 40.

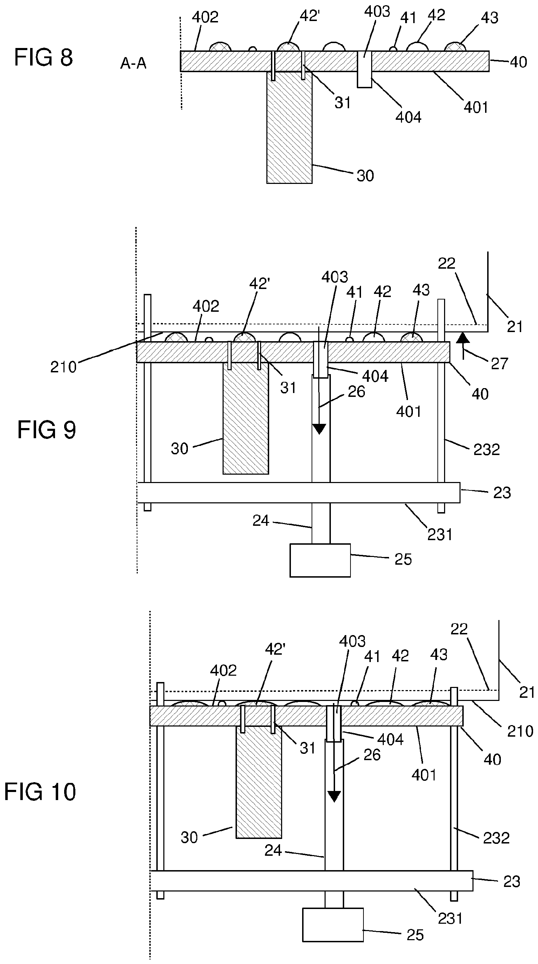

Une vue en coupe brisée selon A-A de l'ensemble ainsi obtenu est montrée sur la figure 8. On y distingue le cordon périphérique 43, l'orifice traversant 403, des cordons intérieurs 42 et un cordon intérieur 42', disposé en sous-face d'un équipement 30, au droit de ce dernier, entre deux organes de fixation 31.

Le procédé selon l'invention comprend ensuite l'application 65 de la deuxième face 402 de la plaque 40 contre la face 210 de la structure support 21. Cette face 210 est de préférence continue et sensiblement plane, aux tolérances de fabrication près, au moins dans la zone destinée à recevoir la plaque 40, dite zone de réception de la plaque 40. Lorsque cette face 210 est initialement percée d'orifices, ces orifices sont bouchés préalablement à l'étape d'accostage, de sorte à assurer son étanchéité.

Lorsque la structure support 21 comprend des caloducs intégrés 22, représentés de manière schématique par un trait pointillé sur la figure 9, l'accostage est réalisé de manière à ce qu'au moins une partie des cordons intérieurs 42, 42' croisent au moins certains de ces caloducs 22 de manière sensiblement perpendiculaire. Ceci permet avantageusement une meilleure dissipation de l'énergie thermique générée lors du fonctionnement des équipements 30, 30', et ce même dans les modes dégradés dans lesquels un ou plusieurs caloducs dysfonctionneraient.

L'étape d'accostage 65 peut être réalisée dans toutes les positions possibles de la structure support 21 et de la plaque 40. A cet effet, la plaque 40 peut notamment être positionnée à la verticale, ou être positionnée à l'horizontale ou inclinée par rapport à l'horizontale, sa deuxième face 402 pouvant alors se trouver aussi bien dirigée vers le haut que dirigée vers le bas.

Un outillage 23 peut ensuite être mis en oeuvre pour assurer le bridage 66 de la plaque 40 contre la structure support 21. Cet outillage peut être de tout type classique en lui-même. A titre d'exemple, il comprend une plaque arrière 231 solidaire d'une pluralité de tiges 232 qui se fixent à la structure support 21, en passant par les trous traversants 405 de la plaque 40. Ce bridage 66 immobilise de manière réversible la plaque 40 par rapport à la structure support 21, pour tous les mouvements autres que celui de rapprochement de ces deux éléments l'un vers l'autre.

Le procédé selon l'invention comprend ensuite la connexion du connecteur fluidique 404 à un tuyau 24 d'un système d'aspiration 25, et l'application d'une aspiration 67, selon la direction montrée en 26 sur la figure 9. Cette aspiration est de préférence réalisée de sorte à établir entre la plaque 40 et la structure support 21, dans le volume délimitée par le cordon périphérique 43, une dépression telle que la pression relative entre la plaque 40 et la structure support 21 est comprise entre -0,4 et -0,6 bars. Cette aspiration a pour effet de plaquer de manière plus étroite la plaque 40 contre la face 210 de la structure support 21, comme indiqué en 27 sur la figure 9. Ce mouvement a pour effet de comprimer les cordons 42, 42', 43, pour tous avec la même force, et provoque leur étalement entre la plaque 40 et la face 210 de la structure support 21. On obtient alors la configuration illustrée sur la figure 10. Les cordons étalés présentent tous la même hauteur, égale à celle des gabarits 41. L'ensemble de ces étapes a de préférence été réalisé en un temps inférieur à celui requis par la composition adhésive polymérisable pour débuter sa polymérisation, ou pour que cette polymérisation ait été réalisée à 10 %. Ce temps est généralement de quelques dizaines de minutes, notamment d'environ 20 min, mais peut aller, selon la composition adhésive polymérisable, jusqu'à 150 min ou plus.

Le procédé selon l'invention comprend ensuite une étape de polymérisation 68, au moins partielle, de la composition adhésive, de préférence jusqu'à atteindre un taux de polymérisation d'au moins 80 %. Cette polymérisation peut être réalisée à température ambiante, c'est-à-dire à environ 20 à 25 °C, ou sous une température plus élevée, avec chauffage. La durée de cette étape est conditionnée par les caractéristiques de polymérisation de la composition particulière mise en oeuvre. Il entre dans les compétences de l'homme du métier de la déterminer pour chaque composition adhésive polymérisable particulière donnée.

Préférentiellement, l'aspiration est maintenue pendant une grande partie de l'étape de polymérisation 68, au moins jusqu'à atteindre un taux de polymérisation d'au moins 80 %, comme montré en 26 sur la figure 10, qui illustre cette étape de polymérisation 68 du procédé selon l'invention. Ceci permet avantageusement d'éviter l'apparition de trous ou autres défauts dans les joints adhésifs en formation.

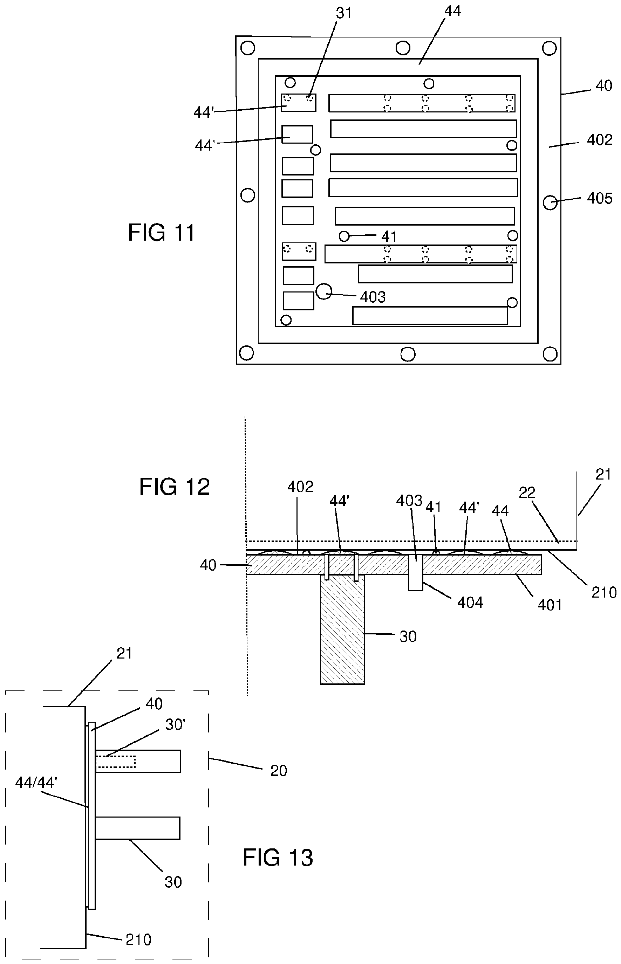

A l'issue de cette étape, on obtient pour la deuxième face 402 de la plaque 40 la configuration montrée sur les figures 11 et 12. La figure 11 montre la configuration de la deuxième face 402 de la plaque 40, qui est dans les faits collée par les joints adhésifs contre la face 210 de la structure support 21. Des joints adhésifs, comprenant un joint adhésif périphérique 44 et des joints adhésifs intérieurs disjoints 44', se sont formés sur la plaque 40, chacun par étalement d'un cordon 43, 42, 42' et polymérisation de la composition adhésive polymérisable qui composait ces cordons. La figure 12 montre une vue en coupe de l'assemblage obtenu, après interruption de l'aspiration, déconnexion du tuyau d'aspiration 24 du connecteur fluidique 404, et retrait de l'outillage de bridage.

Le procédé selon l'invention a été simple et rapide à mettre en oeuvre. Il a permis de réaliser, comme illustré de manière schématique sur la figure 13, l'assemblage des équipements 30, 30' sur la structure support 21 du satellite 20, par le biais de la plaque 40 et de l'ensemble de joints adhésifs 44, 44' formés entre la plaque 40 et la structure support 21, ces joints présentant une hauteur uniforme et étant dépourvus de défauts. Cet assemblage répond avantageusement aux exigences du domaine spatial, en termes tant de poids que de tenue mécanique et de capacité de dissipation des flux thermiques.

## Revendications

1. Procédé d'assemblage d'une pluralité d'équipements (30, 30') sur une structure support (21) d'un satellite artificiel (20), comprenant des étapes successives de :
- fixation (61), par des organes de fixation (31), de chacun desdits équipements (30, 30') sur une première face (401) d'une plaque (40), ladite plaque (40) étant percée d'un orifice traversant (403) muni, au niveau de ladite première face (401) de la plaque (40), d'un connecteur fluidique (404) ;
- sur une deuxième face (402) de la plaque (40) opposée à ladite première face (401), dépôt (64) d'un cordon périphérique continu (43) d'une première composition adhésive polymérisable et, à l'intérieur du périmètre formé par ledit cordon périphérique (43), dépôt (63) d'une pluralité de cordons intérieurs (42, 42') discontinus et disjoints d'une deuxième composition adhésive polymérisable, l'orifice traversant (403) étant inclus dans ledit périmètre formé par le cordon périphérique (43) ;
- application (65) de ladite deuxième face (402) de la plaque (40) contre une face continue (210) de ladite structure support (21) ;
- aspiration (67) via ledit connecteur fluidique (404) de sorte à créer une dépression entre ladite plaque (40) et ladite structure support (21), dans le volume délimité par ledit cordon périphérique (43) ;
- polymérisation (68) au moins partielle de chacune desdites compositions adhésives polymérisables, de sorte à former des joints adhésifs (44) entre ladite deuxième face (402) de la plaque (40) et ladite structure support (21) ; et
- interruption de l'aspiration (69).

2. Procédé selon la revendication 1, selon lequel ladite première composition adhésive polymérisable et ladite deuxième composition adhésive polymérisable sont choisies parmi les résines thermodurcissables.

3. Procédé selon l'une quelconque des revendications 1 à 2, selon lequel ladite première composition adhésive polymérisable et ladite deuxième composition adhésive polymérisable sont identiques.

4. Procédé selon l'une quelconque des revendications 1 à 3, comprenant, préalablement à l'application (65) de ladite deuxième face (402) de la plaque (40) contre ladite face (210) de ladite structure support (21), la fixation (62) sur ladite deuxième face (402) d'une pluralité de gabarits (41) de hauteur inférieure à la hauteur desdits cordons (42, 42', 43) de composition adhésive polymérisable.

5. Procédé selon l'une quelconque des revendications 1 à 4, selon lequel au moins un cordon intérieur (42, 42') est disposé au droit de chacun desdits équipements (30, 30'), de préférence au niveau desdits organes de fixation (31) ou à proximité desdits organes de fixation (31).

6. Procédé selon l'une quelconque des revendications 1 à 5, selon lequel, lorsque ladite structure support (21) contient des caloducs intégrés (22), le dépôt (63) desdits cordons intérieurs (42, 42') d'une deuxième composition adhésive polymérisable et l'application (65) de ladite deuxième face (402) de la plaque (40) contre ladite face (210) de ladite structure support (21) sont réalisés de manière qu'au moins un desdits cordons intérieurs (42, 42') croise un desdits caloducs (22), de préférence perpendiculairement audit caloduc (22).

7. Procédé selon l'une quelconque des revendications 1 à 6, selon lequel l'aspiration (67) est appliquée de sorte à établir entre ladite plaque (40) et ladite structure support (21) une pression relative comprise entre -0,1 et -0,75 bars.

8. Procédé selon l'une quelconque des revendications 1 à 7, selon lequel l'aspiration (67) est maintenue pendant toute la durée de l'étape de polymérisation au moins partielle (68) desdites compositions adhésives polymérisables.

9. Procédé selon l'une quelconque des revendications 1 à 8, comprenant une étape de bridage (66) de la plaque (40) contre la structure support (21) préalablement à l'application de l'aspiration (67).

10. Structure support (21) d'un satellite artificiel (20), sur laquelle sont assemblés une pluralité d'équipements (30, 30'), lesdits équipements (30, 30') étant fixés par des organes de fixation (31) sur une première face (401) d'une plaque (40), et une deuxième face (402) de ladite plaque (40) opposée à ladite première face (401) étant fixée contre une face continue (210) de ladite structure support (21), **caractérisée en ce que** la deuxième face (402) de ladite plaque (40) est fixée contre la face continue (210) de ladite structure support (21) par des joints adhésifs (44, 44') comprenant un joint adhésif périphérique continu (44) et, à l'intérieur du périmètre formé par ledit joint adhésif périphérique (44), une pluralité de joints adhésifs discontinus et disjoints (44').

11. Structure (21) selon la revendication 10, dans laquelle ladite plaque (40) présente une épaisseur, mesurée entre ladite première face (401) et ladite deuxième face (402), comprise entre 1 et 3 mm.

12. Structure (21) selon l'une des revendications 10 ou 11, dans laquelle lesdits joints adhésifs (44, 44') sont formés en résine thermodurcie.

13. Structure (21) selon l'une quelconque des revendications 10 à 12, dans laquelle lesdits joints adhésifs (44, 44') présentent la même hauteur.

14. Structure (21) selon l'une quelconque des revendications 10 à 13, dans laquelle au moins un joint adhésif (44') est disposé au droit de chacun desdits équipements (30, 30'), de préférence au niveau desdits organes de fixation (31).

15. Structure (21) selon l'une quelconque des revendications 10 à 14, dans laquelle ladite structure support (21) contient des caloducs intégrés (22), et au moins un desdits joints adhésifs (44') croise un desdits caloducs (22), de préférence perpendiculairement audit caloduc (22).

16. Satellite artificiel (20) comportant une structure support (21) selon l'une quelconque des revendications 10 à 15.

## Patentansprüche

1. Verfahren zur Montage einer Vielzahl von Vorrichtungen (30, 30') auf einer Trägerstruktur (21) eines künstlichen Satelliten (20), umfassend folgende aufeinanderfolgende Schritte:
- Befestigen (61) jeder der Vorrichtungen (30, 30') anhand von Befestigungsorganen (31) auf einer ersten Fläche (401) einer Platte (40), wobei die Platte (40) von einer Durchgangsöffnung (403) durchbohrt ist, die im Bereich der ersten Fläche (401) der Platte (40) mit einem Fluidkonnektor (404) versehen ist;
- Aufbringen (64) auf einer zweiten Fläche (402) der Platte (40) gegenüber der ersten Fläche (401) eines kontinuierlichen peripheren Strangs (43) aus einer ersten polymerisierbaren Haftzusammensetzung und Aufbringen (63) im Inneren des von dem peripheren Strang (43) gebildeten Umkreises einer Vielzahl diskontinuierlicher und unzusammenhängender innerer Stränge (42, 42') aus einer zweiten polymerisierbaren Haftzusammensetzung, wobei die Durchgangsöffnung (403) in dem von dem peripheren Strang (43) gebildeten Umkreis enthalten ist;
- Anlegen (65) der zweiten Fläche (402) der Platte (40) an einer kontinuierlichen Fläche (210) der Trägerstruktur (21);
- Ansaugen (67) über den Fluidkonnektor (404) derart, dass zwischen der Platte (40) und der Trägerstruktur (21) in dem vom peripheren Strang (43) begrenzten Volumen ein Unterdruck gebildet wird;
- mindestens teilweises Polymerisieren (68) jeder der polymerisierbaren Haftzusammensetzungen, so dass Haftdichtungen (44) zwischen der zweiten Fläche (402) der Platte (40) und der Trägerstruktur (21) gebildet werden; und
- Abbrechen der Ansaugung (69).

2. Verfahren nach Anspruch 1, wobei die erste polymerisierbare Haftzusammensetzung und die zweite polymerisierbare Haftzusammensetzung aus den wärmehärtbaren Harzen ausgewählt sind.

3. Verfahren nach einem der Ansprüche 1 bis 2, wobei die erste polymerisierbare Haftzusammensetzung und die zweite polymerisierbare Haftzusammensetzung identisch sind.

4. Verfahren nach einem der Ansprüche 1 bis 3, das vor dem Anlegen (65) der zweiten Fläche (402) der Platte (40) an der Fläche (210) der Trägerstruktur (21) das Befestigen (62) einer Vielzahl von Schablonen (41) auf der zweiten Fläche (402) mit einer Höhe umfasst, die niedriger als die Höhe der Stränge (42, 42', 43) polymerisierbarer Haftzusammensetzung ist.

5. Verfahren nach einem der Ansprüche 1 bis 4, wobei mindestens ein innerer Strang (42, 42') im rechten Winkel zu jeder der Vorrichtungen (30, 30') vorzugsweise im Bereich der Befestigungsorgane (31) oder in der Nähe der Befestigungsorgane (31) angeordnet ist.

6. Verfahren nach einem der Ansprüche 1 bis 5, wobei, wenn die Trägerstruktur (21) integrierte Wärmeleitungen (22) enthält, das Aufbringen (63) der inneren Stränge (42, 42') aus einer zweiten polymerisierbaren Haftzusammensetzung und das Anlegen (65) der zweiten Fläche (402) der Platte (40) an der Fläche (210) der Trägerstruktur (21) derart durchgeführt werden, dass mindestens einer der inneren Stränge (42, 42') eine der Wärmeleitungen (22) vorzugsweise senkrecht zu der Wärmeleitung (22) kreuzt.

7. Verfahren nach einem der Ansprüche 1 bis 6, wobei das Ansaugen (67) derart erfolgt, dass zwischen der Platte (40) und der Trägerstruktur (21) ein relativer Druck zwischen -0,1 und -0,75 bar erzeugt wird.

8. Verfahren nach einem der Ansprüche 1 bis 7, wobei das Ansaugen (67) während der gesamten Dauer des Schritts der mindestens teilweisen Polymerisierung (68) der polymerisierbaren Haftzusammensetzungen aufrechterhalten wird.

9. Verfahren nach einem der Ansprüche 1 bis 8, das vor der Durchführung des Ansaugens (67) einen Schritt des Spannens (66) der Platte (40) an die Trägerstruktur (21) umfasst.

10. Trägerstruktur (21) eines künstlichen Satelliten (20), auf der eine Vielzahl von Vorrichtungen (30, 30') montiert ist, wobei die Vorrichtungen (30, 30') anhand von Befestigungsorganen (31) auf einer ersten Fläche (401) einer Platte (40) befestigt sind, und eine zweite Fläche (402) der Platte (40) gegenüber der ersten Fläche (401) an einer kontinuierlichen Fläche (210) der Trägerstruktur (21) befestigt ist, **dadurch gekennzeichnet, dass** die zweite Fläche (402) der Platte (40) an der kontinuierlichen Fläche (210) der Trägerstruktur (21) anhand von Haftdichtungen (44, 44') befestigt ist, umfassend eine kontinuierliche periphere Haftdichtung (44) und im Inneren des von der peripheren Haftdichtung (44) gebildeten Umkreises eine Vielzahl von diskontinuierlichen und unzusammenhängenden Haftdichtungen (44').

11. Struktur (21) nach Anspruch 10, wobei die Platte (40) eine zwischen der ersten Fläche (401) und der zweiten Fläche (402) gemessene Dicke aufweist, die zwischen 1 und 3 mm liegt.

12. Struktur (21) nach einem der Ansprüche 10 oder 11, wobei die Haftdichtungen (44, 44') aus wärmegehärtetem Harz gebildet sind.

13. Struktur (21) nach einem der Ansprüche 10 bis 12, wobei die Haftdichtungen (44, 44') dieselbe Höhe aufweisen.

14. Struktur (21) nach einem der Ansprüche 10 bis 13, wobei mindestens eine Haftdichtung (44') im rechten Winkel zu jeder der Vorrichtungen (30, 30') vorzugsweise im Bereich der Befestigungsorgane (31) angeordnet ist.

15. Struktur (21) nach einem der Ansprüche 10 bis 14, wobei die Trägerstruktur (21) integrierte Wärmeleitungen (22) enthält und mindestens eine der Haftdichtungen (44') eine der Wärmeleitungen (22) vorzugsweise senkrecht zur Wärmeleitung (22) kreuzt.

16. Künstlicher Satellit (20), der eine Trägerstruktur (21) nach einem der Ansprüche 10 bis 15 aufweist.

## Claims

1. Method for assembling a plurality of devices (30, 30') on a support structure (21) of an artificial satellite (20), comprising successive steps of:
- attaching (61), via attachment members (31), each of said devices (30, 30') to a first face (401) of a plate (40), said plate (40) being drilled with a through-hole (403) provided, at said first face (401) of the plate (40), with a fluid connector (404) ;
- on a second face (402) of the plate (40) opposite said first face (401), depositing (64) a continuous peripheral bead (43) of a first polymerisable adhesive composition and, within the perimeter formed by said peripheral bead (43), depositing (63) a plurality of discontinuous and disjointed inner beads (42, 42') of a second polymerisable adhesive composition, the through-hole (403) being included within said perimeter formed by the peripheral bead (43);
- pressing (65) said second face (402) of the plate (40) against a continuous face (210) of said support structure (21);
- performing suction (67), via said fluid connector (404), so as to create a negative pressure between said plate (40) and said support structure (21), in the volume delimited by said peripheral bead (43);
- at least partially polymerising (68) each of said polymerisable adhesive compositions so as to form adhesive joints (44) between said second face (402) of the plate (40) and said support structure (21); and
- interrupting the suction (69).

2. Method according to claim 1, wherein said first polymerisable adhesive composition and said second polymerisable adhesive composition are chosen from among thermosetting resins.

3. Method according to any one of claims 1 to 2, wherein said first polymerisable adhesive composition and said second polymerisable adhesive composition are identical.

4. Method according to any one of claims 1 to 3 comprising, prior to the pressing (65) of said second face (402) of the plate (40) against said face (210) of said support structure (21), attaching (62) to said second face (402) a plurality of templates (41), the height whereof is less than the height of said beads (42, 42', 43) of polymerisable adhesive composition.

5. Method according to any one of claims 1 to 4, wherein at least one inner bead (42, 42') is disposed opposite each of said devices (30, 30'), preferably at said attachment members (31) or in the vicinity of said attachment members (31).

6. Method according to any one of claims 1 to 5 wherein, when said support structure (21) contains integrated heat pipes (22), the deposition (63) of said inner beads (42, 42') of a second polymerisable adhesive composition and the pressing (65) of said second face (402) of the plate (40) against said face (210) of said support structure (21) are carried out in such a way that at least one of said inner beads (42, 42') crosses one of said heat pipes (22), preferably perpendicularly to said heat pipe (22).

7. Method according to any one of claims 1 to 6, wherein the suction (67) is performed so as to obtain a relative pressure between said plate (40) and said support structure (21) of between -0.1 and -0.75 bar.

8. Method according to any one of claims 1 to 7, wherein the suction (67) is maintained throughout the duration of the step of at least partially polymerising (68) said polymerisable adhesive compositions.

9. Method according to any one of claims 1 to 8, comprising a step of clamping (66) the plate (40) against the support structure (21), prior to performing suction (67).

10. Support structure (21) of an artificial satellite (20), on which a plurality of devices (30, 30') is assembled, wherein said devices (30, 30') are attached by attachment members (31) to a first face (401) of a plate (40), and a second face (402) of said plate (40), opposite said first face (401), is attached against a continuous face (210) of said support structure (21), **characterized in that** the second face (402) of said plate (40) is attached against the continuous face (210) of said support structure (21) by adhesive joints (44, 44') comprising a continuous peripheral adhesive joint (44) and, within the perimeter formed by said peripheral adhesive joint (44), a plurality of discontinuous and disjointed adhesive joints (44').

11. Structure (21) according to claim 10, wherein said plate (40) has a thickness, measured between said first face (401) and said second face (402), comprised between 1 and 3 mm.

12. Structure (21) according to one of claims 10 or 11, wherein said adhesive joints (44, 44') are made of thermoset resin.

13. Structure (21) according to any one of claims 10 to 12, wherein said adhesive joints (44, 44') have the same height.

14. Structure (21) according to any one of claims 10 to 13, wherein at least one adhesive joint (44') is disposed opposite each of said devices (30, 30'), preferably at said attachment members (31).

15. Structure (21) according to any one of claims 10 to 14, wherein said support structure (21) contains integrated heat pipes (22), and at least one of said adhesive joints (44') crosses one of said heat pipes (22), preferably perpendicularly to said heat pipe (22).

16. Artificial satellite (20) including a support structure (21) according to any one of claims 10 to 15.
